(19) Europäisches Patentamt
European Patent Office
Office européen des brevets

(11) Publication number: 0 352 339
A1

# (12) EUROPEAN PATENT APPLICATION

(21) Application number: **88111144.7**

(22) Date of filing: **12.07.88**

(51) Int. Cl.4: **C08F 299/08 , C08F 230/08 , C09D 143/04**

(43) Date of publication of application:
**31.01.90 Bulletin 90/05**

(84) Designated Contracting States:
**BE DE FR GB**

(71) Applicant: **TORAY SILICONE COMPANY, LIMITED**
**2-3-16, Muro-machi Nihonbashi**
**Chuo-ku Tokyo 103(JP)**

(72) Inventor: **Hatanaka, Hidekatsu**
**102 Sun Cooperative 1-5, 2-chome, Suehiro**
**Chiba-shi Chiba Prefecture(JP)**
Inventor: **Kondo, Hidetoshi**
**6, 1-chome Yushudai Nishi**
**Ichihara-shi, Chiba Prefecture(JP)**
Inventor: **Koshii, Taro**
**993-21, Miyako-cho**
**Chiba-shi, Chiba Prefecture(JP)**

(74) Representative: **Spott, Gottfried, Dr. et al**
**Patentanwälte Spott und Puschmann**
**Sendlinger-Tor-Platz 11**
**D-8000 München 2(DE)**

## (54) Coating composition.

(57) Coating compositions which contain a copolymer made by the free radical polymerization of a organopolysiloxane containing free radical polymerizable functional groups on the terminals, such as vinyl terminated polydimethylsiloxane; a free radical polymerizable acrylate compound or methacrylate compound, such as a mixture of ethyl acrylate and methyl methacrylate; and an organosilane of the formula

$(A)(R)_nSi(P)_{3-n}$

in which A is a monovalent hydrocarbon radical containing free radical polymerizable groups, R is a monovalent hydrocarbon radical, P is a hydrolyzable monovalent group, and $\bar{n}$ is 0, 1, or 3. The coating compositions can contain a cure accelerating catalyst such as an organotin compound. These coating compositions have excellent weather resistances and adhere to surfaces found in civil engineering and construction.

EP 0 352 339 A1

# COATING COMPOSITION

The present invention relates to a coating composition, and, more specifically, relates to a coating composition which, curing under the action of atmospheric humidity to form a highly durable film, is useful in civil engineering and construction applications.

A contemporary structural problem is the appearance of leaks, for example, of rain, etc., in buildings due to the generation of cracks in concrete structures caused by the contraction which occurs during drying, expansion due to the alkali-aggregate reaction, expansion accompanying the appearance of rust in reinforcing bars due to neutralization, etc. A method known for preventing this is to form a coating of a rubbery elastomer on the surface of the concrete, for example, of acrylic rubber, urethane rubber, silicone rubber, chloroprene rubber, etc.

However, coatings of acrylic rubber, urethane rubber, and chloroprene rubber have a poor weather resistance, and suffer from a gradual decline in physical properties and a loss of elasticity under long-term exposure to ultraviolet radiation. As a consequence, cracks appear in the cured coating itself, and leakage, for example, of rain, again will occur through these cracks. Furthermore, these films have low elongations at low temperatures, and thus cannot tolerate use in the northern districts. Although coatings prepared from silicone rubbers have an excellent weather resistance, they have an unsatisfactory adhesion to various substrates encountered in civil engineering and construction, such as mortar, aluminum, silicone sealants, etc. A further problem here is the comparatively high cost.

A number of coating compositions prepared from silicone-modified acrylic polymers have been proposed as means solving the above problems.

For example, Japanese Patent Application Laid Open [Kokai] Number 59-227955 [227,955/84], published Dec. 21, 1984, discloses a coating composition prepared from the material obtained by the radical polymerization reaction of a acrylate or methacrylate compound with an acryloxyalkylsilane or methacryloxyalkylsilane. Japanese Patent Application Laid Open Number 54-36395 [36,395/79] which is equivalent to U.S. Pat. No. 4,334,036, issued to Yonezawa et al, on Jun. 8, 1982, discloses a coating composition prepared from a vinyl resin containing in each molecule at least one hydrolyzable group-containing silyl group. Japanese Patent Application Laid Open Number 61-151272 [151,272/86], published Jul. 9, 1986, discloses a coating composition prepared by the radical copolymerization of an acrylate or a methacrylate compound, low-molecular organopolysiloxane having a radically polymerizable functional group at one terminal, and monomer having in each molecule both a radically polymerizable functional group and a functional group which is not radically polymerizable.

## SUMMARY OF THE INVENTION

### Problems to Be Solved by the Invention

However, these coatings still have unsatisfactory weather resistance and durabilities, and again have unsatisfactory adhesions for various substrates encountered in civil engineering and construction.

The present inventors carefully examined the problems discussed above, and discovered as a result that a coating composition prepared by the free radical polymerization of a specific organopolysiloxane with "acrylate" monomer and a specific organosilane can form a film having an excellent weather resistance and durability while simultaneously evidencing an excellent adhesion to the various substrates found in civil engineering and construction. The present invention was achieved based on this finding.

The object of the present invention is a coating composition which affords a coating having an excellent weather resistance and durability as well as an excellent bonding to the various substrates in civil engineering and construction.

### Means Solving the Problems and Function Thereof

The present invention relates to a coating composition comprising as its principal component a copolymer consisting essentially of the product which is prepared by the free radical polymerization of (A) an essentially linear organopolysiloxane having free radical polymerizable functional groups at both molecular chain terminals, (B) a free radical polymerizable compound selected from the group consisting of an acrylate compound, a methacrylate compound, and mixtures of acrylate compound and methacrylate compound, and mixtures having at least one acrylate compound or methacrylate compound and at least another free radical polymerizable compound where at least 50 weight percent of

the mixture is acrylate compound or methacrylate compound, and (C) an organosilane having the following general formula

$$A - \overset{\displaystyle R_n}{\overset{|}{Si}} - P_{3-n}$$

or the partial hydrolysis condensate thereof, in which A is a monovalent organic group which contains a free radical polymerizable functional group, P is a hydrolyzable monovalent organic group, R is a monovalent hydrocarbon group, and $\underline{n}$ is a positive integer selected from 0, 1, and 2.

Component (A) used in the present invention is an essentially linear organopolysiloxane having free radical polymerizable functional groups at both terminals of the molecular chain. These free radical polymerizable functional groups consist of, for example, vinyl group, allyl group, acrylic group, and methacrylic group. While such functional groups must be present at both terminals of the molecular chain in order to form a copolymer with components (B) and (C), they may also be present, but only in small quantities, as side chains. Even though such side-chain free radical polymerizable functional groups are useful for achieving denser crosslinking, it is nevertheless preferred that they not be present in order to run a stable free radical polymerization reaction. Although the average molecular weight of component (A) is not specifically restricted, it is preferably in the range of 246 to 100,000. At below 246, the proportion of polysiloxane main-chain component is reduced, and it becomes difficult to obtain a coating composition with an excellent weather resistance and durability. Above 100,000, free radical polymerization proceeds with difficulty, and the adhesion to various substrates also tends to decline as well. Examples of component (A) can be illustrated by organopolysiloxanes having the following general formula:

$R''R^*R^*SiO(R'R'SiO)_mSiR^*R^*R''$

in which each $R'$ is a monovalent hydrocarbon radical such as an alkyl radical such as methyl, ethyl, propyl, and butyl; an alkenyl radical such as vinyl and allyl; an aryl radical such as phenyl; an aralkyl radical such as benzyl; an alkaryl radical such as styryl and tolyl; a cycloalkyl radical such as cyclohexyl and cyclopentyl; and monovalent halogenated hydrocarbon radicals in which the monovalent hydrocarbon radicals in which part or all of the hydrogen atoms have been replaced by halogen atoms e.g., fluorine, chlorine, bromine, for example, 3-chloropropyl and 3,3,3-trifluoropropyl. The monovalent hydrocarbon radical will generally be methyl, vinyl, and phenyl, and particularly methyl, but it is not required that all such groups be identical and combinations of different monovalent hydrocarbon radicals can be used. $R''$ is a monovalent radical which has a free radical polymerizable functional group, and consists of such radicals as alkenyl radicals e.g., vinyl and allyl and radicals which contain acryloxy group or methacryloxy group. $R^*$ is a monovalent radical as described by $R'$ or an alkoxy radical, such as methoxy or ethoxy, preferably methoxy. The average value of $\underline{m}$ in the formula can be from 1 to 1,400, preferably from 10 to 500. Component (A) can be produced, for example, by the methanol-liberating reaction of hydroxysiloxy-terminated organopolysiloxane with a large excess of gamma-methacryloxypropyltrimethoxysilane, or by the reaction of alpha,omega-bis(chloromethyl)polydimethylsiloxane with calcium methacrylate, calcium acrylate, sodium acrylate, or sodium methacrylate, or by a hydrosilylation reaction between alpha,omega-dihydrogenpolydimethylsiloxane with allyl acrylate or allyl methacrylate. Component (A) is to have an essentially linear molecular structure, and this encompasses both straight chains and slightly branched straight chains. The proportion of component (A) in the copolymer is preferably 0.1 to 70 wt% and more preferably 1 to 50 wt%. At less than 0.1 wt% component (A), but more preferably at least 15 weight percent of the coating composition is component (A) to give the best results, it will not be possible to generate a film having good gloss retention or durability, that is, for which there is little change in mechanical strength parameters such as hardness, tensile strength, elongation, etc. On the other hand, while the durability generally improves as the quantity of component (A) increases, the post-reaction viscosity tends to become excessive at more than 70 wt% component (A).

The component (B) used in the present invention is a free radical polymerizable compound which can be an acrylate compound, a methacrylate compound or a mixture of these compounds, or a mixture of an acrylate compound or a methacrylate compound with another free radical polymerizable compound, preferably (B) is a mixture of acrylate compound and methacrylate compound. The compound contains one free radical polymerizable double bond, and includes various types of monomers, oligomers, and prepolymers. The acrylate compound and/or methacrylate compound is the principal ingredient in (B).

The acrylate compound includes methyl acrylate, ethyl acrylate, n-butyl acrylate, t-butyl acrylate, 2-ethylhexyl acrylate, cyclcohexyl acrylate, isononyl acrylate, stearyl acrylate, 2-hydroxyethyl acrylate, and 2-hydroxypropyl acrylate. The

methacrylate compound includes methyl methacrylate, ethyl methacrylate, n-butyl methacrylate, t-butyl methacrylate, 2-ethylhexyl methacrylate, cyclohexyl methacrylate, isononyl methacrylate, stearyl methacrylate, 2-hydroxyethyl methacrylate, and 2-hydroxypropyl methacrylate. The acrylate compound or the methacrylate compound can be used as a single compound or as combinations of two or more types.

Acrylate compound and/or methacrylate compound is the principal ingredient in (B) and is at least 50 weight percent of the overall weight of component (B). When the total quantity of acrylate compound and methacrylate compound accounts for less than 50 wt% of component (B), it will not be possible to produce a coating composition having an excellent weather resistance.

While component (B) discussed above can be used in the form of the single compound or the combination of two or more types, it is preferred that acrylate compound be used in combination with methacrylate compound in order to afford a coating composition having even better film-forming properties and an even better weather resistance. While the proportion of component (B) in the copolymer is not specifically restricted, it is preferably in the range of 20 to 90 wt%, more preferably from 25 to 85 weight percent.

When a mixture contains a free radical polymerizable compound other than acrylate or methacrylate, component (B) should be at least 50 weight percent acrylate compound or methacrylate compound to provide a coating composition which exhibits weather resistance.

Free radical polymerizable compounds other than acrylate or methacrylate compounds which are usable in the present invention, include low-molecular weight unsaturated hydrocarbons such as ethylene, propylene, etc.; vinyl halides such as vinyl chloride, vinyl fluoride, etc.; the vinyl esters of organic acids, such as vinyl acetate; vinyl aromatic compounds such as styrene, substituted styrenes, vinylpyridine, vinylnaphthalene, etc.; acrylic acid; methacrylic acid; acrolein; acrylonitrile; N-vinyl compounds such as N-vinylpyrrolidone, N-vinylcaprolactam, etc.; amides such as acrylamide, methacrylamide, N-butoxymethyl-methacrylamide, N-butoxymethylacrylamide, etc.; maleic anhydride, esters of maleic acid or fumaric acid, and non-silicone radically polymerizable monomers; as well as fluoroalkyl-containing acrylic monomers such as

$$CF_3(CF_2)_7(CH_2)_4OOC\overset{CH_3}{\overset{|}{C}} = CH_2,$$

$$C_pF_{(2p+1)}(CH_2)_2OOCCH = CH_2$$

in which $\underline{p}$ has an average value of from 4 to 14. These free radical polymerizable compounds can be used singly or as the combination of two or more types.

Component (C) of the present invention is taken into the copolymer by free radical polymerization with components (A) and (B). Upon application, the hydrolyzable groups in component (C) are hydrolyzed by atmospheric humidity, and this component thus simultaneously functions both as a crosslinker which crosslinks the composition of the present invention and as an adhesion improver which bonds the composition of the present invention to the various substrates encountered in civil engineering and construction. This component (C) is an organosilane having in each molecule at least one free radical polymerizable functional group and at least one hydrolyzable group, or is the partial hydrolysis condensate of such an organosilane. In the formula given above, A is a monovalent organic group which contains a free radical polymerizable functional group, for example, the acryloxypropyl group, gamma-methacryloxypropyl group, vinyl group, and allyl group. P is a monovalent hydrolyzable organic group, for example, alkoxy groups such as methoxy and ethoxy; or an acetoxy, oxime, acetamide, aminoxy, or isopropenoxy group. Furthermore, R is a monovalent hydrocarbon group as exemplified by alkyl groups such as methyl, ethyl, and propyl, and phenyl. Examples of this component are vinyltrimethoxysilane, vinyltriacetoxysilane, vinyltrioximesilane, allyltrimethoxysilane, vinyltris(methoxyethoxy)silane, gamma-methacryloxypropyltrimethoxysilane, gamma-acryloxypropyltrimethoxysilane, and their partial hydrolysis condensates. While the proportion of component (C) in the copolymer is not rigorously restricted, it will fall within the range of 0.1 to 30 wt%, preferably 0.5 to 20 wt%, and more preferably from 1 to 10 weight percent. The film's chemical resistance and durability decline at less than 0.1 wt% component (C), and its adhesion for the various civil engineering/construction substrates also declines. At above 30 wt%, the film's hardness is too high, and its durability is thus reduced.

The method of free radical polymerization comprises Those methods known from the art, for example, exposure to radiation, use of a free radical polymerization initiator, etc. Among these, the use of a free radical polymerization initiator is preferred for the corresponding ease of polymerization and ease of regulation of the molecular weight. In concrete terms, one has recourse to solution polymerization using a solvent, bulk polymerization, emulsion polymerization, etc., but solution polymerization is most preferred. As an example of solution polymerization, component (A) is dissolved in solvent, and polymerization is conducted by dripping the liquid mixture of components (B) and (C) plus free radical polymerization initiator into the former with mixing and heating. It is also possible to dissolve components (A) through (C) plus the

free radical polymerization initiator in solvent and to carry out polymerization by stirring with heating. The preparation of the copolymers is preferably carried out under an inert atmosphere such as a nitrogen atmosphere. Solvents useful in this regard will be good solvents for components (A) through (C), such as toluene, xylene, methyl ethyl ketone, methyl isobutyl ketone, etc. The free radical polymerization initiator will be those known in the art, for example, azo compounds such as azobisisobutyronitrile, dimethylazodiisobutyronitrile, etc., and organoperoxides such as benzoyl peroxide, di-t-butyl peroxide, etc., can be used.

It is preferred in the present invention that a cure-accelerating catalyst be added to the copolymer prepared by the free radical polymerization of the aforementioned components (A) through (C), with the objective of accelerating the cure of the coating composition of the present invention and forming a durable film in a relatively short period of time. Such curing catalysts take the form of organotin compounds such dibutyltin dilaurate, dibutyltin maleate, and dibutyltin dioctoate etc.; acidic compounds such as phosphoric acid, p-toluenesulfonic acid, etc.; amines such as ethylenediamine, triethylenetetramine, etc. While the quantity of use in this regard is not rigorously specified, it will fall within the range of 0.001 to 10 wt% based on the copolymer obtained by the free radical polymerization of components (A) through (C), and preferably will fall within the range of 0.01 to 5 wt%.

The coating composition of the present invention may contain various fillers, pigments, organic resins, etc., as long as the object of the present invention is not adversely affected. Examples in this respect are crystalline silica, amorphous silica, fumed silica, calcium carbonate, magnesium carbonate, clay, mica, aluminum oxide, aluminum hydroxide, barium sulfate, zinc oxide, iron oxide, titanium oxide, carbon black, glass fiber, dispersion stabilizers, ultraviolet absorbers, acrylic resins, epoxy resins, and unsaturated polyester resins.

In order to improve the workability in application, the coating composition of the present invention may be diluted with a good solvent for the copolymer produced by the free radical polymerization of the aforesaid components (A) through (C), for example, toluene, benzene, xylene, methyl ethyl ketone, methyl isobutyl ketone, thinner, etc.

## EXAMPLES

The invention will be explained in the following with reference to illustrative examples. In the examples, parts = parts by weight, and the physical properties of the film were evaluated by the following methods.

### Weather resistance

The test specimens were coated with the coating composition, cured and then exposed in a Sunshine Carbon-Arc Weatherometer for 300 hours. The specimens were then visually inspected for discoloration, decline in gloss, creasing, blistering, peeling, and chalking was evaluated by touch.

### Tensile strength and elongation

Evaluated according to JIS A-6021.

### Bonding strength

Evaluated according to JIS A-6910.

## EXAMPLE 1

A coating composition was prepared by making a copolymer by mixing 90 parts xylene and 20 parts alpha,omega-divinylpolydimethylsiloxane of the formula

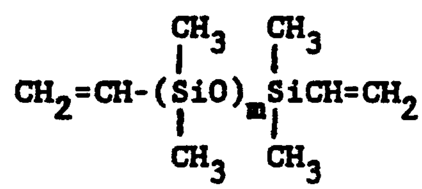

in which m has a value of 70 on average and it has a viscosity at 25 degrees Centigrade of 0.1 Pa.s in a 300 mL three-neck flask equipped with stirrer, pressure-equalizing addition funnel, reflux condenser, and thermometer. The resulting solution was heated with stirring under a nitrogen atmosphere until the temperature reached 90 degrees Centigrade and then the heating was suspended. A mixture of 52 parts ethyl acrylate (EA), 24 parts methyl methacrylate (MMA), 5 parts gamma-methacryloxypropyltrimethoxysilane, and 1 part azobisisobutyronitrile (AIBN) was then continuously dripped into the heated solution over 1.5 hours. Care was exercised to maintain the liquid temperature at 90 degrees CEntigrade because this was an exothermic polymerization. After the completion of addition, stirring was continued at 90 degrees Centigrade for 4 hours in order to complete the

reaction. The obtained reaction mixture, that is, the copolymer of the coating composition of the present invention, was stored in a container under a nitrogen atmosphere. To 100 parts of the copolymer 0.5 part dibutyltin dioctoate was added as the cure-accelerating catalyst, and this was coated on a teflon sheet and cured by standing for 1 week. The resulting cured material was peeled from the teflon sheet, and its properties were measured in accordance with JIS A-6021: the film, which had an excellent gloss and flexibility, had a tensile strength of 20 kg/cm2 and an elongation of 120%.

This coating composition was respectively applied on mortar, aluminum, and glass, and the bonding strength was then measured in each case using a tensile tester in accordance with JIS A-6910. The bonding strength was at least 5 kg/cm2 for all substrates. A mortar board coated with this coating composition was placed in the Weatherometer and the weather resistance was examined: even after 300 hours, there was no discoloration or decline in gloss, and no creasing, peeling, blistering, or chalking were observed. When this coating composition was applied on a cured silicone sealant, no crawling was observed and the adhesion was excellent.

## EXAMPLE 2

A coating composition was prepared by making a copolymer mixing 100 parts xylene and 30 parts of the alpha,omega=divinylpolydimethylsiloxane as described in Example 1 and heating the solution to 90 degrees Centigrade. A mixture of 40 parts MMA, 30 parts butyl acrylate, 10 parts gamma-methacryloxypropylmethyldimethoxysilane, and 1 part AIBN was then dripped into the heated solution, controlling the temperature to maintain the temperature at 90 degrees Centigrade, followed by heating at 90 degrees Centigrade for 4 hours after the reaction was completed. The resulting solution contain a copolymer.

This copolymer solution was also coated on a teflon sheet as in Example 1 and then allowed to stand for 1 month to cure. A film was obtained which had a gloss slightly inferior to that of the film obtained in Example 1, but which had an excellent flexibility. When its weather resistance and bonding were examined, the respective performances were the same as in Example 1.

## EXAMPLE 3

A coating composition was prepared by first making an organopolysiloxane by mixing 250 g (0.1 mol) alpha,omega-dihydroxypolydimethylsiloxane of the formula

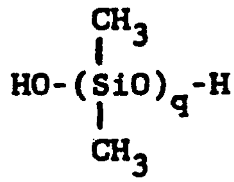

in which q has a value of 30 on average, 50 g (0.2 moles) gamma-methacryloxypropyltrimethoxysilane, and 15 g potassium acetate in a four-neck flask equipped with a stirrer, a thermometer, and a condenser. After stirring for 1 hour at room temperature under a nitrogen atmosphere, a reaction was carried out for 10 hours at 120 degrees Centigrade. The obtained reaction solution was cooled and then evacuated with stirring using a vacuum pump in order to distill off the low-boiling fraction. The resuting product was then filtered after the addition of a filtration assistant. An acrylic-modified polydimethylsiloxane was obtained with acrylic functionality at both terminals.

A copolymer was prepared by mixing 40 parts of the acrylic-modified polydimethylsiloxane, 40 parts EA, 20 parts MMA, 5 parts gamma-methacryloxypropyltrimethoxysilane, and 100 part xylene, followed by the addition of 0.5 part AIBN. This was then polymerized at 90 degrees Centigrade under a nitrogen atmosphere for 5 hours to prepare a copolymer. The resulting copolymer solution was coated on a teflon sheet and cured as in Example 1: the resulting film had the same excellent flexibility and gloss as in Example 1. Evaluation of the weather resistance and bonding again gave results as in Example 1.

## EXAMPLE 4

A coating composition was prepared by first making an organopolysiloxane by mixing 300 parts alpha,omega-bis(chloromethyl)dimethylpolysiloxane of the formula

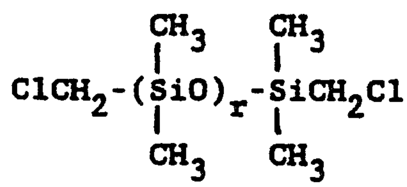

in which r has a value of 150 on average, 15 parts

potassium acrylate, 1 part tetrabutylphosphonium chloride, 0.03 part phenothiazine, and 400 parts toluene in a flask and then heated under reflux for 20 hours under a nitrogen atmosphere. The obtained reaction solution was cooled and the solids were filtered off. The toluene was distilled in vacuo from the filtrate to afford a colorless and transparent polymer. Analysis of this polymer revealed it to be polydimethylsiloxane having acrylic groups at both molecular chain terminals. The polydimethylsiloxane was termed an acryloxy terminated polydimethylsiloxane.

A copolymer was prepared by mixing 20 parts of the acryloxy terminated polydimethylsiloxane, 25 parts MMA, 50 parts EA, 5 parts gamma-methacryloxypropyltrimethoxysilane, and 1 part AIBN The resulting mixture was then free radical polymerized in xylene at 90 degrees Centigrade for 4 hours as in Example 1 to prepare a xylene solution of the copolymer. A coating composition was prepared by mixing the copolymer prepared above with the cure-accelerating catalyst as described in Example 1 and it was then cured in sheet form: a film with an excellent gloss was obtained. The physical properties of this film were examined in accordance with JIS A-6021: it had the physical properties of a rubber with a tensile strength of 18 kg/cm2 and an elongation of 100%. This solution had good coatability and adhesion for silicone sealant.

## EXAMPLE 5

A coating composition was prepared by first making a organopolysiloxane by mixing 400 parts octamethylcyclotetrasiloxane, 40 parts methylvinylcyclosiloxane of the formula

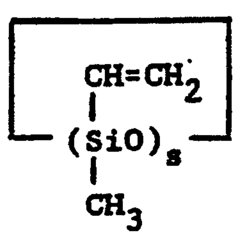

in which r has a value of 3 through 8, 14 parts alpha,omega-divinylpolydimethylsiloxane of the formula

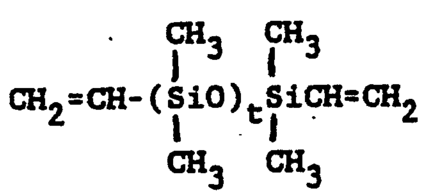

in which t has a value of 7 on average, and 0.5 part KOH in a flask and reacted at 150 degrees Centigrade for 5 hours under a nitrogen atmosphere. The obtained reaction liquid was cooled and then stirred for 1 hour with 0.7 part dimethyldichlorosilane. The low-boiling fraction was stripped by heating at 150 degrees Centigrade under a vacuum-pump vacuum. The reaction liquid was then treated on a press filter to afford a vinyl-modified polydimethylsiloxane having vinyl groups as part of the side chains and at both terminals of the molecular chain.

A copolymer was prepared by mixing 20 parts of this vinyl-modified polydimethylsiloxane and 150 parts xylene in a flask equipped with a pressure-equilizing addition funnel and a condenser, heating to 90 degrees Centigrade under a nitrogen atmosphere, and a liquid mixture of 50 parts EA, 25 parts MMA, 5 parts gamma-methacryloxypropyltrimethoxysilane, and 1 part AIBN was then dripped into this solution to carry out free radical polymerization.

The solution of the copolymer obtained above was used as the coating composition, was cured as in Example 1 to give a sheet, and a film having an excellent gloss was obtained. The physical properties of this film were measured in accordance with JIS A-6021, and the results were a tensile elongation of 110% and a tensile strength of 50 kg/cm2.

## COMPARISON EXAMPLE 1

A composition was prepared by mixing 60 parts EA, 30 parts MMA, 5 parts gamma-methacryloxypropyltrimethoxysilane, 0.5 part AIBN, and 100 parts xylene in a flask and polymerizing as in Example 1 at 90 degrees Centigrade under a nitrogen atmosphere for 5 hours to afford a copolymer.

A cure-accelerating catalyst as in Example 1 was added to this copolymer solution to make a coating composition, which was then cured into sheet. Although the obtained film had an excellent gloss, it had a very poor elongation and flexibility. When coated on silicone sealant, crawling was observed, which prevented uniform application. The cause was considered to be the absence of the organopolysiloxane as a component in copolymerization.

## COMPARISON EXAMPLE 2

A coating composition was prepared by the

method of Example 1, with the exception that the same quantity of trimethylsiloxy-terminated polydimethylsiloxane (viscosity = 0.1 Pa.s at 25 degrees Centigrade) was used in place of the alpha, omega-divinylpolydimethylsiloxane (viscosity = 0.1 Pa.s at 25 degrees Centigrade) used in Example 1. Stannous octoate was added as the cure-accelerating catalyst, and the composition was cured to give a sheet, but a glossy elastic film was not obtained.

Because the coating compostion of the present invention comprises as its principal component the copolymer prepared by the free radical polymerization of (A) essentially linear organopolysiloxane having free radical polymerizable functional groups at both molecular chain terminal, (B) free radical polymerizable compound selected from acrylate and methacrylate in which the methacrylate is present in an amount of at least 25 weight percent, and (C) a specific organosilane or its partial hydrolysis condensate, it characteristically affords a coating which bonds well to the various substrates encountered in civil engineering and construction and which also has an excellent weather resistance and durability.

Accordingly, it is very effective for application as a protective coating composition, waterproofing composition, or paint composition to various building elements and wall surfaces in civil engineering and construction.

## Claims

1. A coating composition comprising as its principal component a copolymer consisting essentially of the product which is prepared by the free radical polymerization of

(A) an essentially linear organopolysiloxane having free radical polymerizable functional groups at both molecular chain terminals,

(B) a free radical polymerizable compound selected from the group consisting of an acrylate compound, a methacrylate compound, and mixtures of an acrylate compound and a methacrylate compound, and mixtures having at least one acrylate compound or methacrylate compound and at least another free radical polymerizable compound where at least 50 weight percent of the mixture is acrylate compound or methacrylate compound, and

(C) an organosilane having the following general formula

$$\begin{array}{c} Rn \\ | \\ A - Si - P3\text{-}n \end{array}$$

or the partial hydrolysis condensate thereof, in which A is a monovalent organic group which contains a free radical polymerizable functional group, P is a hydrolyzable monovalent organic group, R is a monovalent hydrocarbon group, and $\underline{n}$ is a positive integer selected from 0, 1, and 2.

2. The coating composition according to claim 1 in which the organopolysiloxane of (A) has the general formula

$$R''R^*R^*SiO(R'R'SiO)_mSiR^*R^*R''$$

in which each $R'$ is a monovalent radical selected from the group consisting of hydrocarbon radical and halogenated hydrocarbon radical, each $R''$ is a monovalent free radical polymerizable group selected from the group consisting of an alkenyl radical, a radical containing acryloxy functional group, and a radical containing methacryloxy functional group, each $R^*$ is a monovalent radical selected from an alkoxy radical and a radical defined by $R'$, and $\underline{m}$ has a value of from 1 to 1,400, the polymerizable compound of (B) is a mixture of acrylate compound and methacrylate compound, and the organosilane of (C) is a silane having a value for $\underline{n}$ of 0 or 1, and a catalytic amount of a cure-accelerating catalyst for the cure of the copolymer.

3. The coating compostion according to claim 2 in which component (A) is present in an amount of from 0.1 to 70 weight percent, (B) is present in an amount of from 20 to 90 weight percent, (C) is present in an amount of from 0.1 to 30 weight percent and is an organosilane selected from the group consisting of vinyltrimethoxysilane, vinylacetoxysilane, vinyltrioximesilane, allyltrimethoxysilane, vinyltris(methoxyethoxy)silane, gamma-methacryloxypropylmethyldimethoxysilane, gamma-methacryloxypropyltrimethoxysilane, gamma-acryloxypropyltrimethoxysilane, and their partial hydrolysis condensates.

European Patent Office

# EUROPEAN SEARCH REPORT

Application Number

EP 88 11 1144

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 159 894 (CHISSO CORP.)<br>* Claim 1 *<br>--- | 1 | C 08 F 299/08<br>C 08 F 230/08<br>C 09 D 3/82 |
| A | EP-A-0 263 237 (DAINIPPON INK AND CHEMICALS)<br>--- | 1 | |
| D,A | PATENT ABSTRACTS OF JAPAN, vol. 9, no. 96 (C-278)[1819], 25th April 1985; & JP-A-59 227 955 (TOUSHIBA SILICONE K.K.) 21-12-1984<br>--- | 1 | |
| D,A | PATENT ABSTRACTS OF JAPAN, vol. 10, no. 350 (C-387)[2406], 26th November 1986; & JP-A-61 151 272 (TOAGOSEI CHEM. IND. CO., LTD) 09-07-1986<br>----- | 1 | |
| | | | TECHNICAL FIELDS SEARCHED (Int. Cl.4) |
| | | | C 09 D<br>C 08 G<br>C 08 F |

The present search report has been drawn up for all claims

| Place of search | Date of completion of the search | Examiner |
|---|---|---|
| THE HAGUE | 23-02-1989 | VON KUZENKO M.T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)